# EUROPEAN PATENT APPLICATION

(11) **EP 3 373 064 A1**
(43) Date of publication of application: **12.09.2018**
(21) Application number: 18160342.4
(22) Date of filing: 06.03.2018
(51) Int. Cl.: G02B 21/36, G02B 27/00

(54) **CONTINUOUS SPHERICAL ABERRATION CORRECTION TUBE LENS**

(30) Priority: 08.03.2017 US 201762468792 P; 05.05.2017 NL 2018859
(71) Applicant: Illumina, Inc., San Diego, CA 92122 (US)
(72) Inventor: Watson, Dakota, San Diego, CA 92122 (US); Simon, Prince, San Diego, CA 92122 (US); Nardorff, Georg, San Diego, CA 92122 (US); Visconti, Anthony, San Diego, CA 92122 (US)
(74) Representative: Murgitroyd & Company

(57) **Abstract**

Tube lenses for imaging instruments are described herein. The tube lenses may be implemented with imaging instruments that include an objective lens (500) that is not entirely infinitely corrected. A tube lens may include: a first optical element (400) configured to receive diverging light from an objective lens along an optical path between the objective lens and the tube lens, and a second optical element (460). The first optical element converges the diverging light received from the objective lens onto the second optical element, and the first element is movable along its longitudinal axis relative to the second optical element.

## Description

### CROSS REFERENCE TO RELATED APPLICATIONS

The present application claims the benefit of U.S. Provisional Patent Application No. 62/468,792 filed on March 8, 2017 and titled "Continuous Spherical Aberration Correction Tube Lens," which is incorporated herein by reference in its entirety. The present application also claims the benefit of Netherlands Patent Application No. N2018859 filed on May 5, 2017, and titled "Continuous Spherical Aberration Correction Tube Lens."

### BACKGROUND

Spherical aberration in an imaging system is caused by the inability to focus off-axis and axial light from a point source to a single focal point. It is the primary aberration that impacts imaging performance of high numeric aperture lenses that image samples having a variable thickness (i.e., multi-plane samples). For a sample having a variable thickness, spherical aberration may vary as a function of the sample's thickness. In some cases, a changing thermal environment (e.g., thermal expansion of the sample) may also introduce spherical aberration. Traditionally, microscope vendors offer the ability to adjust a corrective collar in the objective lens to compensate for spherical aberration.

Due to design considerations, some imaging instruments may not include elements on the objective lens for correcting spherical aberration. In one current implementation of an imaging system of a multi-plane sample, a compensator lens may move in and out of the optical path going from the objective to the image sensor, depending on whether the focus is on a first imaging plane (e.g., a top surface of a sample), or a second imaging plane (e.g., a bottom surface of a sample). Such a design, however, only offers discrete spherical aberration correction along two planes, and may not accommodate samples with different cover glass thicknesses or thermal variations in the environment.

### SUMMARY

Provided in some examples herein are tube lenses for imaging instruments.

In a first example, a tube lens for an imaging system includes: a first optical element, a second optical element, and a third optical element. In this example, the first optical element is configured to receive diverging light from an objective lens along an optical path between the objective lens and the tube lens; and converge the diverging light received from the objective lens onto the second optical element. In this example, the first optical element is movable along its longitudinal axis relative to the second optical element, and the third optical element is configured to converge light onto an image sensor of the imaging system.

In various implementations of this first example, the first optical element is a positive element, the second optical element is a negative element, and the third optical element is a positive element. The first and second optical elements may be a doublet lens. The third optical element may be a singlet or doublet lens. In some implementations, the third optical element is configured to make an imaging system telecentric on an image sensor.

In some implementations, the diverging light received from the objective lens diverges about 0.25 to about 1 degree as measured by a center of the field of view marginal ray exiting a rear aperture of the objective lens. The first optical element may translate a distance of up to about 25 mm along its longitudinal axis. The tube lens may have a focal length between about 150 mm and about 350 mm.

In some implementations, the tube lens may include a stage for translating the first optical element along its longitudinal axis, where translation of the first optical element changes a length of an optical path between the first optical element and the second optical element.

In a second example, an imaging system includes: an objective lens optically coupled to a light generation module, the objective lens to focus light onto a sample; and a tube lens optically coupled to the objective lens. The imaging system may use a tube lens as described herein. In a particular implementation, the imaging system is a sequencing system (e.g., a DNA sequencing system). The imaging system, in some implementations, may not comprise a mechanism for adjusting the objective lens to correct for spherical aberration.

Other features and aspects of the disclosed technology will become apparent from the following detailed description, taken in conjunction with the accompanying drawings, which illustrate, by way of example, the features in accordance with implementations of the disclosed technology. The summary is not intended to limit the scope of any inventions described herein, which are defined by the claims and equivalents.

It should be appreciated that all combinations of the foregoing concepts (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

### BRIEF DESCRIPTION OF THE DRAWINGS

The present disclosure, in accordance with one or more various implementations, is described in detail with reference to the following figures. The figures are provided for purposes of illustration only and merely depict example implementations. Furthermore, it should be noted that for clarity and ease of illustration, the elements in the figures have not necessarily been drawn to scale.

Some of the figures included herein illustrate various implementations of the disclosed technology from different viewing angles. Although the accompanying descriptive text may refer to such views as "top," "bottom" or "side" views, such references are merely descriptive and do not imply or require that the disclosed technology be implemented or used in a particular spatial orientation unless explicitly stated otherwise.
FIG. 1A illustrates a generalized block diagram of an example image scanning system with which systems and methods disclosed herein may be implemented.
FIG. 1B is block diagram illustrating an example two-channel, line-scanning modular optical imaging system that may be implemented in particular implementations.
FIG. 2A is a side view diagram illustrating an example modular optical analytic system in accordance with implementations disclosed herein.
FIG. 2B is a ray tracing block diagram illustrating an example configuration of an optical assembly for the emissions optics module of the system of FIG. 2A, for two different positions of a tube lens element, in accordance with implementations disclosed herein.
FIG. 2C is a block diagram illustrating an example configuration of an optical assembly for the emissions optics module of the system of FIG. 2A, for a first position of a tube lens element, in accordance with implementations disclosed herein.
FIG. 2D is a block diagram illustrating an example configuration of an optical assembly for the emissions optics module of the system of FIG. 2A, for a second position of a tube lens element, in accordance with implementations disclosed herein.
FIG. 3A is a ray tracing block diagram illustrating an example imaging system including an example tube lens in a first configuration when an objective is focused at a first surface of a sample.
Fig. 3B is a ray tracing block diagram illustrating the example imaging system of FIG. 3A including the example tube lens in a second configuration when the objective is focused on a second surface of the sample.
FIG. 4 is an operational flow diagram illustrating an example method of controlling a continuous spherical aberration correction tube lens in accordance with implementations.

The figures are not exhaustive and do not limit the present disclosure to the precise form disclosed.

### DETAILED DESCRIPTION

As used herein, the term "xy plane" is intended to mean a 2 dimensional area defined by straight line axes x and y. When used in reference to a detector and an object observed by the detector, the area can be further specified as being orthogonal to the direction of observation between the detector and object being detected. When used herein to refer to a line scanner, the term "y direction" refers to the direction of scanning.

As used herein, the term "z direction" or "z axis" is intended to specify a direction or axis that is orthogonal to an area of an object that is observed by a detector. For example, the direction of focus for an optical system may be specified along the z axis.

As used herein, the term "optically coupled" is intended to refer to one element being adapted to impart light to another element directly or indirectly.

As noted above, in pre-existing imaging instruments, correction of spherical aberration introduced by the thickness of the coverglass on a sample may be done by adjusting the position of an element in the objective lens. However, in some imaging instruments it may be undesirable or impracticable to adjust an element in the objective. This is particularly the case where, for example, the objective is a crucial part of a focus tracking mechanism that uses a z-stage to maintain focus on a target in the sample. In such an implementation, the z-stage may function as a high-bandwidth system that must respond rapidly to changes of focus and compensate for movement of the sample. The z-stage bandwidth may be inversely correlated with the mass of the objective. Accordingly, adding additional mass (e.g., a motor or other mechanism to adjust the objective lens) will inevitably reduce the bandwidth of the z-stage. Furthermore, a motor on a precision tracking system, as discussed above, introduces potential cross-coupling errors in that resonance may be induced between a spherical aberration compensating motor and a focusing motor.

Implementations disclosed herein address these aforementioned problems by instead moving an element of a tube lens to correct for spherical aberration introduced by the thickness of the coverglass of a sample (or for other reasons). The tube lens may include a front, positive element that is moveable to adjust the length of the optical path between the tube lens and an objective, a central negative element, and a rear positive element. By articulating the front, positive element of the tube lens, spherical aberration may be continuously adjusted for a range of sample thicknesses (e.g., different cover glass thickness) and variations in the thermal environment such as thermally induced lens changes and index of refraction changes that impact spherical aberration.

The tube lens structure described herein leverages an imaging instrument comprising an objective lens that is not entirely infinitely corrected. As such, light collected from an imaged sample by the objective lens is not collimated when it exits the rear aperture of the objective lens. Rather, the light diverges slightly (e.g. 0.25 to 1 degrees as measured by a center of the field of view marginal ray exiting a rear aperture of the objective lens). In this near-infinity configuration, the tube lens may articulate a front, positive lens element to adjust the length of the optical path between the front positive element and a middle element, and correspondingly, the area of the middle lens element that receives converging light. This adjustment of the footprint of light on the middle negative element of the tube lens may be used to tune spherical aberration. As such, spherical aberration in the system may be corrected by articulating the front element to change the footprint of light received by a middle element of the tube lens. As further described below, this may correct for spherical aberration without changing magnification, distortion or other aberrations in the optical imaging system.

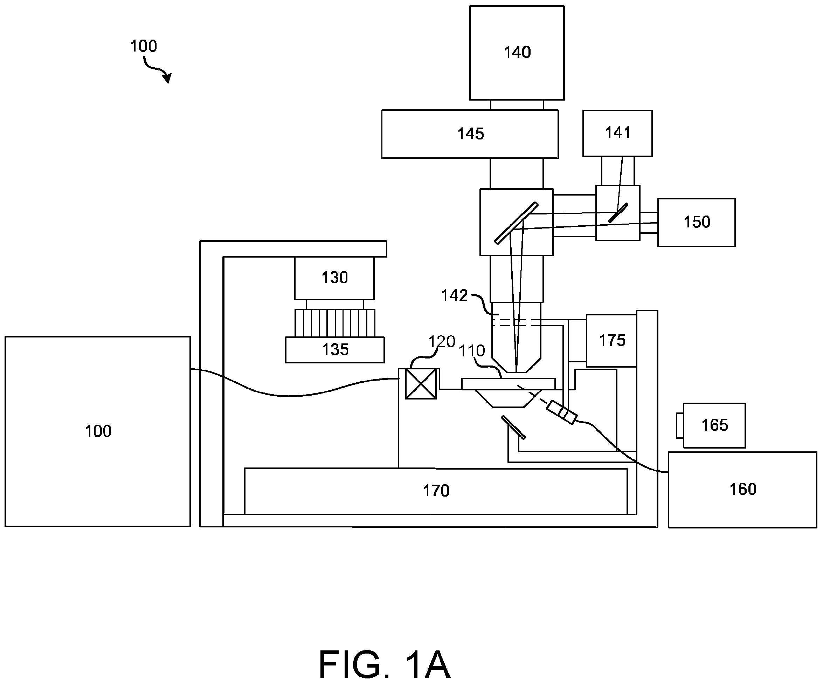

Before describing various implementations of the systems and methods disclosed herein, it is useful to describe an example environment with which the technology disclosed herein can be implemented. One such example environment is that of an imaging system 100 illustrated in FIG. 1A. The example imaging system may include a device for obtaining or producing an image of a sample. The example outlined in FIG. 1A shows an example imaging configuration of a backlight design implementation. It should be noted that although systems and methods may be described herein from time to time in the context of example imaging system 100, these are only examples with which implementations of the technology disclosed herein may be implemented. After reading this description, one of ordinary skill in the art will understand how the tube lens described herein can be implemented with this and other scanners, microscopes and other imaging systems.

As can be seen in the example of FIG. 1A, subject samples are located on sample container 110 (e.g., a flow cell as described herein), which is positioned on a sample stage 170 under an objective lens 142. Light source 160 and associated optics direct a beam of light, such as laser light, to a chosen sample location on the sample container 110. The sample fluoresces and the resultant light is collected by the objective lens 142 and directed to an image sensor of camera system 140 to detect the fluorescence. Sample stage 170 is moved relative to objective lens 142 to position the next sample location on sample container 110 at the focal point of the objective lens 142. Movement of sample stage 110 relative to objective lens 142 can be achieved by moving the sample stage itself, the objective lens, some other component of the imaging system, or any combination of the foregoing. Further implementations may also include moving the entire imaging system over a stationary sample.

Fluid delivery module or device 100 directs the flow of reagents (e.g., fluorescently labeled nucleotides, buffers, enzymes, cleavage reagents, etc.) to (and through) sample container 110 and waste valve 120. Sample container 110 can include one or more substrates upon which the samples are provided. For example, in the case of a system to analyze a large number of different nucleic acid sequences, sample container 110 can include one or more substrates on which nucleic acids to be sequenced are bound, attached or associated. In various implementations, the substrate can include any inert substrate or matrix to which nucleic acids can be attached, such as for example glass surfaces, plastic surfaces, latex, dextran, polystyrene surfaces, polypropylene surfaces, polyacrylamide gels, gold surfaces, and silicon wafers. In some applications, the substrate is within a channel or other area at a plurality of locations formed in a matrix or array across the sample container 110.

In some implementations, the sample container 110 may include a biological sample that is imaged using one or more fluorescent dyes. For example, in a particular implementation the sample container 110 may be implemented as a patterned flow cell including a translucent cover plate, a substrate, and a liquid sandwiched therebetween, and a biological sample may be located at an inside surface of the translucent cover plate or an inside surface of the substrate. The flow cell may include a large number (e.g., thousands, millions, or billions) of wells or regions that are patterned into a defined array (e.g., a hexagonal array, rectangular array, etc.) into the substrate. Each region may form a cluster (e.g., a monoclonal cluster) of a biological sample such as DNA, RNA, or another genomic material which may be sequenced, for example, using sequencing by synthesis. The flow cell may be further divided into a number of spaced apart lanes (e.g., eight lanes), each lane including a hexagonal array of clusters. Example flow cells that may be used in implementations disclosed herein are described in U.S. Patent No. 8,778,848.

The system also comprises temperature station actuator 130 and heater/cooler 135 that can optionally regulate the temperature of conditions of the fluids within the sample container 110. Camera system 140 can be included to monitor and track the sequencing of sample container 110. Camera system 140 can be implemented, for example, as a charge-coupled device (CCD) camera (e.g., a time delay integration (TDI) CCD camera), which can interact with various filters within filter switching assembly 145, objective lens 142, and focusing laser/focusing laser assembly 150. Camera system 140 is not limited to a CCD camera and other cameras and image sensor technologies can be used. In particular implementations, the camera sensor may have a pixel size between about 5 and about 15 µm.

Output data from the sensors of camera system 140 may be communicated to a real time analysis module (not shown) that may be implemented as a software application that analyzes the image data (e.g., image quality scoring), reports or displays the characteristics of the laser beam (e.g., focus, shape, intensity, power, brightness, position) to a graphical user interface (GUI), and, as further described below, dynamically corrects distortion in the image data.

Light source 160 (e.g., an excitation laser within an assembly optionally comprising multiple lasers) or other light source can be included to illuminate fluorescent sequencing reactions within the samples via illumination through a fiber optic interface (which can optionally comprise one or more re-imaging lenses, a fiber optic mounting, etc.). Low watt lamp 165, focusing laser 150, and a reverse dichroic are also presented in the example shown. In some implementations focusing laser 150 may be turned off during imaging. In other implementations, an alternative focus configuration can include a second focusing camera (not shown), which can be a quadrant detector, a Position Sensitive Detector (PSD), or similar detector to measure the location of the scattered beam reflected from the surface concurrent with data collection.

Although illustrated as a backlit device, other examples may include a light from a laser or other light source that is directed through the objective lens 142 onto the samples on sample container 110. Sample container 110 can be ultimately mounted on a sample stage 170 to provide movement and alignment of the sample container 110 relative to the objective lens 142. The sample stage can have one or more actuators to allow it to move in any of three dimensions. For example, in terms of the Cartesian coordinate system, actuators can be provided to allow the stage to move in the X, Y and Z directions relative to the objective lens. This can allow one or more sample locations on sample container 110 to be positioned in optical alignment with objective lens 142.

A focus (z-axis) component 175 is shown in this example as being included to control positioning of the optical components relative to the sample container 110 in the focus direction (typically referred to as the z axis, or z direction). Focus component 175 can include one or more actuators physically coupled to the optical stage or the sample stage, or both, to move sample container 110 on sample stage 170 relative to the optical components (e.g., the objective lens 142) to provide proper focusing for the imaging operation. For example, the actuator may be physically coupled to the respective stage such as, for example, by mechanical, magnetic, fluidic or other attachment or contact directly or indirectly to or with the stage. The one or more actuators can be configured to move the stage in the z-direction while maintaining the sample stage in the same plane (e.g., maintaining a level or horizontal attitude, perpendicular to the optical axis). The one or more actuators can also be configured to tilt the stage. This can be done, for example, so that sample container 110 can be leveled dynamically to account for any slope in its surfaces.

Focusing of the system may refer to aligning the focal plane of the objective lens with the sample to be imaged at the chosen sample location. However, focusing can also refer to adjustments to the system to obtain a desired characteristic for a representation of the sample such as, for example, a desired level of sharpness or contrast for an image of a test sample. Because the usable depth of field of the focal plane of the objective lens may be small (sometimes on the order of 1 µm or less), focus component 175 closely follows the surface being imaged. Because the sample container is not perfectly flat as fixtured in the instrument, focus component 175 may be set up to follow this profile while moving along in the scanning direction (herein referred to as the y-axis).

The light emanating from a test sample at a sample location being imaged can be directed to one or more detectors of camera system 140. An aperture can be included and positioned to allow only light emanating from the focus area to pass to the detector. The aperture can be included to improve image quality by filtering out components of the light that emanate from areas that are outside of the focus area. Emission filters can be included in filter switching assembly 145, which can be selected to record a determined emission wavelength and to cut out any stray laser light.

Although not illustrated, a controller can be provided to control the operation of the scanning system. The controller can be implemented to control aspects of system operation such as, for example, focusing, stage movement, and imaging operations. In various implementations, the controller can be implemented using hardware, algorithms (e.g., machine executable instructions), or a combination of the foregoing. For example, in some implementations the controller can include one or more CPUs or processors with associated memory. As another example, the controller can comprise hardware or other circuitry to control the operation, such as a computer processor and a non-transitory computer readable medium with machine-readable instructions stored thereon. For example, this circuitry can include one or more of the following: field programmable gate array (FPGA), application specific integrated circuit (ASIC), programmable logic device (PLD), complex programmable logic device (CPLD), a programmable logic array (PLA), programmable array logic (PAL) or other similar processing device or circuitry. As yet another example, the controller can comprise a combination of this circuitry with one or more processors.

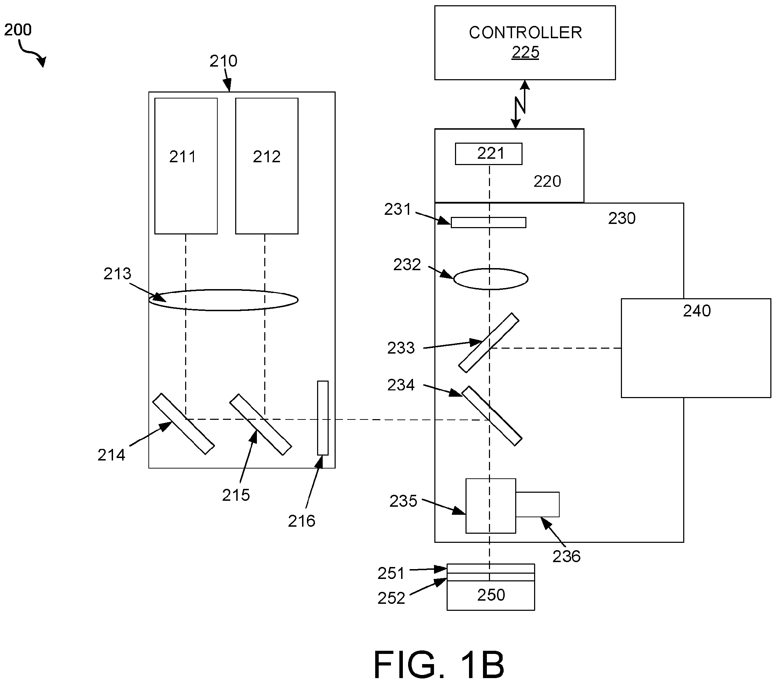

FIG. 1B is block diagram illustrating an example two-channel, line-scanning modular optical imaging system 200 that may be implemented in particular implementations. It should be noted that although systems and methods may be described herein from time to time in the context of example imaging system 200, these are only examples with which implementations of the technology disclosed herein may be implemented. The tube lens described herein can be implemented with this and other scanners, microscopes and other imaging systems.

In some implementations, system 200 may be used for the sequencing of nucleic acids. Applicable techniques include those where nucleic acids are attached at fixed locations in an array (e.g., the wells of a flow cell) and the array is imaged repeatedly. In such implementations, system 200 may obtain images in two different color channels, which may be used to distinguish a particular nucleotide base type from another. More particularly, system 200 may implement a process referred to as "base calling," which generally refers to a process of a determining a base call (e.g., adenine (A), cytosine (C), guanine (G), or thymine (T)) for a given spot location of an image at an imaging cycle. During two-channel base calling, image data extracted from two images may be used to determine the presence of one of four base types by encoding base identity as a combination of the intensities of the two images. For a given spot or location in each of the two images, base identity may be determined based on whether the combination of signal identities is [on, on], [on, off], [off, on], or [off, off].

As depicted, system 200 includes a line generation module (LGM) 210 with two light sources, 211 and 212, disposed therein. Light sources 211 and 212 may be coherent light sources such as laser diodes which output laser beams. Light source 211 may emit light in a first wavelength (e.g., a red color wavelength), and light source 212 may emit light in a second wavelength (e.g., a green color wavelength). The light beams output from laser sources 211 and 212 may be directed through a beam shaping lens or lenses 213. In some implementations, a single light shaping lens may be used to shape the light beams output from both light sources. In other implementations, a separate beam shaping lens may be used for each light beam. The beam shaping lenses of LGM 210 or other optical components of the imaging system may be configured to shape the light emitted by light sources 211 and 212 into a line patterns (e.g., by using one or more Powel lenses, or other beam shaping lenses, diffractive or scattering components).

LGM 210 may further include mirror 214 and semi-reflective mirror 215 configured to direct the light beams through a single interface port to an emission optics module (EOM) 230. The light beams may pass through a shutter element 216. In some implementations, a Powell lens may be used to shape the line beams into line patterns prior to passing through shutter element 216. EOM 230 may include objective 235 and a z-stage 236 which moves objective 235 longitudinally closer to or further away from a target 250. For example, target 250 may include a liquid layer 252 and a translucent cover plate 251, and a biological sample may be located at an inside surface of the translucent cover plate as well an inside surface of the substrate layer located below the liquid layer. The z-stage may then move the objective as to focus the light beams onto either inside surface of the flow cell (e.g., focused on the biological sample). The biological sample may be DNA, RNA, proteins, or other biological materials responsive to optical sequencing as known in the art.

EOM 230 may include semi-reflective mirror 233 to reflect a focus tracking light beam emitted from a focus tracking module (FTM) 240 onto target 250, and then to reflect light returned from target 250 back into FTM 240. FTM 240 may include a focus tracking optical sensor to detect characteristics of the returned focus tracking light beam and generate a feedback signal to optimize focus of objective 235 on target 250.

EOM 230 may also include semi-reflective mirror 234 to direct light through objective 235, while allowing light returned from target 250 to pass through. EOM 230 may include a tube lens 232, which, as further described below, may include an element that may be continuously articulated in a longitudinal direction to adjust the length of the optical path between objective 235 and tube lens 232 and correct spherical aberration (e.g., caused by focusing in different planes of sample 250). Light transmitted through tube lens 232 may pass through filter element 231 and into camera module (CAM) 220. CAM 220 may include one or more optical sensors 221 to detect light emitted from the biological sample in response to the incident light beams (e.g., fluorescence in response to red and green light received from light sources 211 and 212).

Controller 225 can be provided to control the operation of imaging system 210. Controller 225 may be integrated into system 200 or implemented on a computing device communicatively coupled to system 200. Controller 225 can be implemented to control aspects of system operation such as, for example, focusing, stage movement, imaging operations, image processing, and articulation of an element of tube lens 232 (e.g., articulation of a stage carrying that element) to correct for spherical aberrations or for other reasons. In various implementations, the controller can be implemented using hardware, algorithms (e.g., machine executable instructions), or a combination of the foregoing. For example, in some implementations the controller can include one or more CPUs or processors with associated memory. As another example, the controller can comprise hardware or other circuitry to control the operation, such as a computer processor and a non-transitory computer readable medium with machine-readable instructions stored thereon. For example, this circuitry can include one or more of the following: field programmable gate array (FPGA), application specific integrated circuit (ASIC), programmable logic device (PLD), complex programmable logic device (CPLD), a programmable logic array (PLA), programmable array logic (PAL) or other similar processing device or circuitry. As yet another example, the controller can comprise a combination of this circuitry with one or more processors.

Output data from the sensors of CAM 220 may be communicated to a real time analysis module (not shown). Real time analysis module, in various implementations, executes computer software program instructions for analyzing the image data (e.g., image quality scoring, base calling, etc.), reporting or displaying the characteristics of the beam (e.g., focus, shape, intensity, power, brightness, position) to a graphical user interface (GUI), etc.

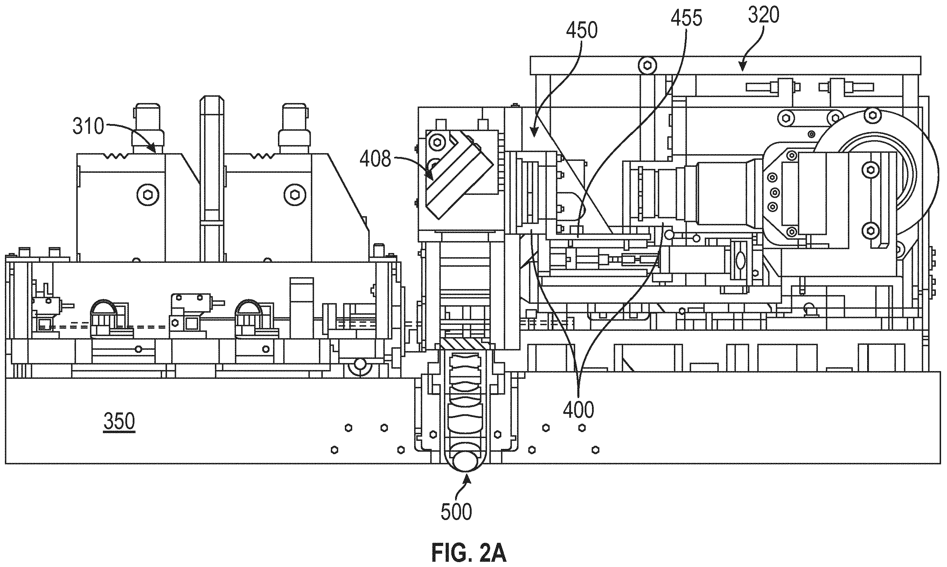

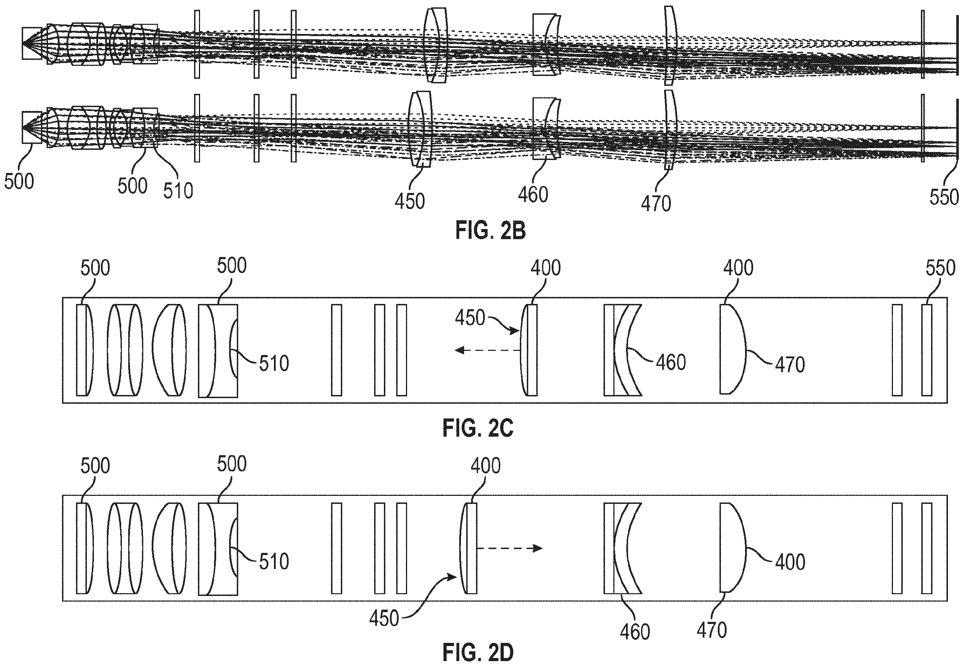

FIG. 2A is a side, cross-sectional diagram illustrating an example modular optical analytic system that may implement a tube lens 400 with an articulating element 450 to correct for spherical aberration in accordance with the disclosure. As illustrated in FIG. 2A, LGM 310 and EOM 320 may be aligned and mechanically coupled to precision mounting plate 350, as well as to each other. EOM 320 may include an objective 500 aligned, via mirror 408 with tube lens 400, which in turn is optically coupled to LGM 310, such that light beams generated by LGM 310 transmit through an interface baffle between LGM 310 and EOM 320, pass through objective 500, and strike an optical target. Responsive light radiation from the target may then pass back through objective 500 and into tube lens 400.

In some implementations, EOM 320 may be mechanically coupled to a z-stage, e.g., controlled by actuators on an alignment. In some examples, the z-stage may be articulated by a precision coil and actuated by a focusing mechanism which may adjust and moves objective 500 to maintain focus on a flow cell. For example, the signal to control to adjust the focus may be output from a focus tracking module. This z-stage may align the EOM optics, for example, by articulating objective 500, tube lens 400, and/or lens element 450 of tube lens 400.

As discussed above, the tube lens structure described herein leverages an imaging instrument comprising an objective lens that is not entirely infinitely corrected to correct for spherical aberration. As such, in various implementations, objective 500 is not entirely infinity corrected. Light collected from an imaged sample by objective lens 500 is not entirely collimated when it exits the rear aperture of the objective lens. Rather, the light diverges slightly (e.g. about 0.25 to about 1 degree as measured by a center of the field of view marginal ray exiting a rear aperture of the objective lens). In this configuration, tube lens 400 includes an articulating front lens 450 that may be translated along its longitudinal axis using a motion stage 455. In a particular implementation, motion stage 455 may be a stepper motion stage that may be translated using a controller (e.g., controller 225). This articulation of front lens 450 to correct for spherical aberration artifacts introduced by objective 500 imaging through varied thicknesses of a sample substrate or cover glass (e.g. a flow cell). This is further described with reference to FIGs. 2B-2D.

FIG. 2B is a ray tracing block diagram illustrating an example configuration of an optical assembly for the EOM 320, for two different positions of a tube lens element 450, in accordance with implementations disclosed herein. FIGs. 2C-2D are block diagrams (without ray tracing) similarly illustrating the configuration of the optical assembly for the EOM 320.

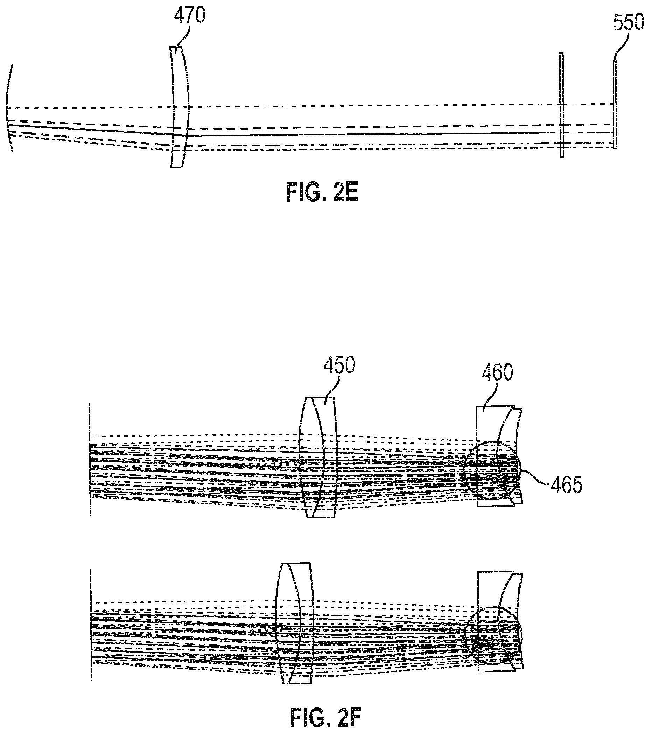

As illustrated in the configuration of FIGs. 2B-2D, light exiting rear aperture 510 of objective 500 diverges slightly (e.g. 0.25 to 1 degrees as measured by a center of the field of view marginal ray exiting the rear aperture) along the optical path from element 510 to element 450 of tube lens 400. Tube lens 400 in this example configuration includes a frontal positive lens doublet 450, a middle negative lens doublet 460, and a rear positive lens singlet 470. In the configuration illustrated by FIG. 2B, it may be preferable to keep the camera lens fixed and only move a single element tube lens 400 to adjust for spherical aberration of tube lens 400. Additionally, rear lens element 470 may be configured as a telecentric lens that maintains a chief ray angle space across the field space that is normal to the surface of image sensor 550. This is illustrated by FIG. 2E, which shows lens element 470 collimating diverging chief rays onto an image sensor 550. In such a configuration, rear lens element 470 may not be used to correct for spherical aberration.

Additionally, in this example, as the light between objective 400 and frontal positive lens element 450 is essentially collimated, albeit with a slight divergence, the light seen by this lens element 450 may not change substantially. As such, in this near-infinity configuration, tube lens 400 may correct for spherical aberration by articulating frontal positive lens doublet 450 to adjust the length of the optical path between frontal positive lens element 450 and middle negative lens element 460 of the tube lens, and correspondingly, the area of lens element 460 that sees converging light from lens element 450 (i.e., the "footprint" of light on lens element 460). This is illustrated by FIG 2F. As positive element 450 articulates away from middle element 460, the length of the optical path between the two elements increases and light footprint 465 shrinks in size. Conversely, as positive element 450 articles toward middle element 460, the length of the optical path between the two elements decreases and light footprint 465 increases in size (i.e., there is less convergence of light between the two elements). The change in light footprint 465 may therefore introduce compensating spherical aberration. This adjustment of spherical aberration may be understood in terms of the interaction between the wavefront and the surface of lens 460, where a smaller wavefront footprint may cause less aberration due to less curvature sag of the optical surfaces.

As such, spherical aberration in this configuration may be compensated for by articulating the frontal positive lens element 450 away from or closer to lens element 460 to change the footprint of light received by element 460 of tubes lens 400. This may correct for spherical aberration in the system without changing magnification, distortion or other aberrations in the optical imaging system.

In some implementations, tube lens 400 may have a focal length between about 150 mm and about 350 mm. In one particular implementation, tube lens 400 may have a focal length between about 200 mm and about 300 mm. In some implementations, lens element 450 may longitudinally translate a total distance of about 5 mm to up to about 25 mm.

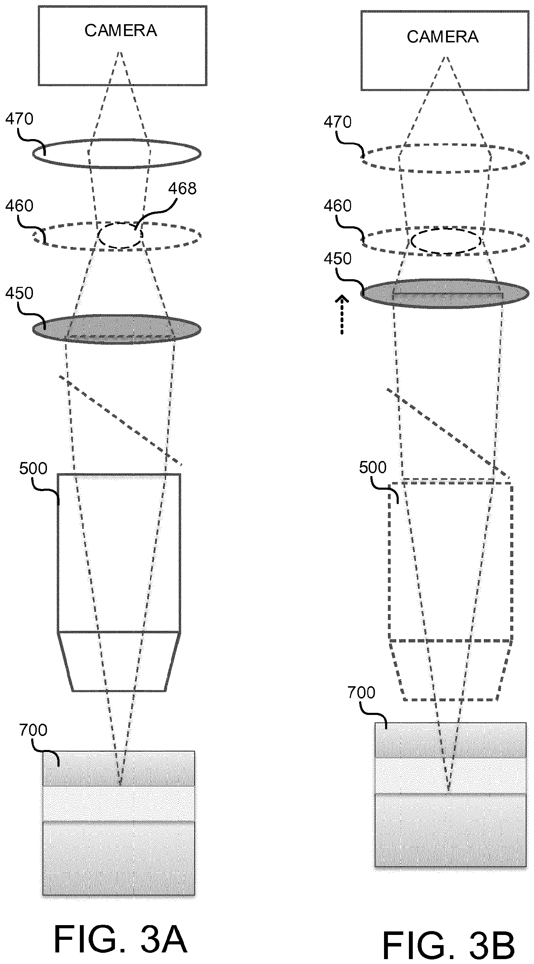

FIGs. 3A-3B are ray tracing block diagrams illustrating a side view of an example imaging system including a tube lens 400 in two different configurations. In this environment, the imaging system is imaging a sample 700 including a translucent cover plate, a substrate, and a sample area (e.g., a liquid) sandwiched therebetween. For example, sample 700 may be a flow cell including a top interior surface and bottom interior surface separated by a fluid passage, each of the interior surfaces having a plurality of nucleic acid sites that are fluorescently tagged.

In the first configuration (FIG. 3A), a top interior surface of sample 700 is being imaged, and lens element 450 is in a first position that produces a light footprint 468 on lens element 460 that compensates for spherical aberration in the system. In the second configuration (Fig. 3B), a bottom interior surface of sample 700 is being imaged, and lens element 450 is articulated closer to lens element 460 to compensate for spherical aberration.

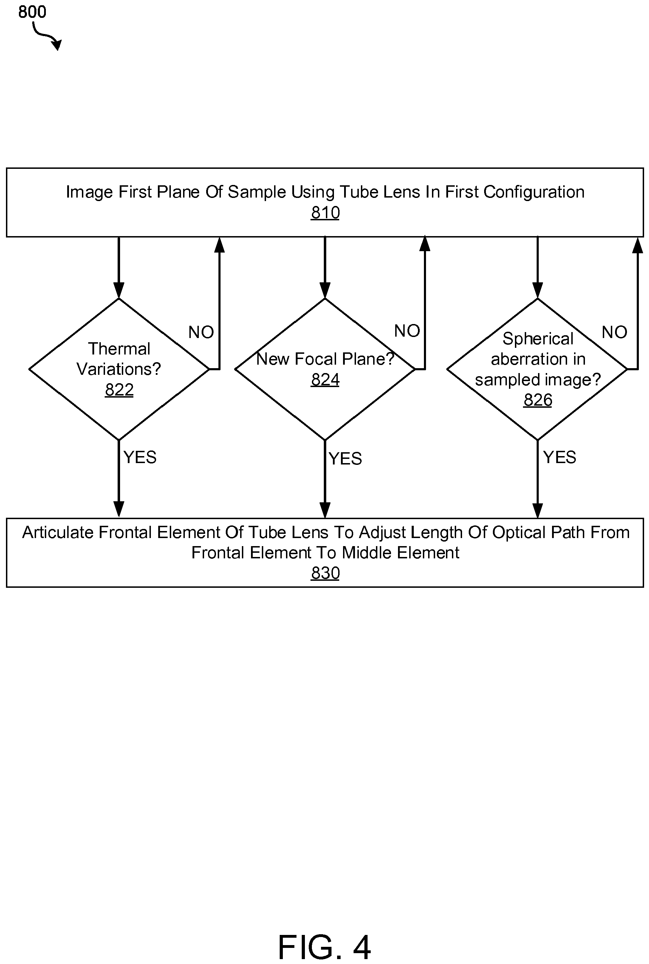

FIG. 4 is an operational flow diagram illustrating an example method 800 of controlling a continuous spherical aberration correction tube lens in accordance with implementations. At operation 810, a first plane of a sample (e.g., a top surface) is imaged using the tube lens in a first configuration. At decisions 822, 824, and 826, it is determined if there is a condition that has introduced sufficient spherical aberration into the system that requires translation of the frontal tube lens element. This determination, in implementations, may be made by a controller 225 of the system. For example, it may be determined that there are thermal variations in the system that are introducing spherical aberration, that sampled images are showing spherical aberration, or that a new focal plane of a sample (e.g., a bottom surface) is being imaged. In response to any of these conditions, at operation 830 the frontal element of the tube lens may be articulated to adjust the length of the optical path between the frontal element and the middle element of the tube lens.

It should be appreciated that all combinations of the foregoing concepts (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

The terms "substantially" and "about" used throughout this disclosure, including the claims, are used to describe and account for small fluctuations, such as due to variations in processing. For example, they can refer to less than or equal to ±5%, such as less than or equal to ±2%, such as less than or equal to ±1%, such as less than or equal to ±0.5%, such as less than or equal to ±0.2%, such as less than or equal to ±0.1%, such as less than or equal to ±0.05%.

To the extent applicable, the terms "first," "second," "third," etc. herein are merely employed to show the respective objects described by these terms as separate entities and are not meant to connote a sense of chronological order, unless stated explicitly otherwise herein.

Although described above in terms of various exemplary implementations and implementations, it should be understood that the various features, aspects and functionality described in one or more of the individual implementations are not limited in their applicability to the particular implementation with which they are described, but instead can be applied, alone or in various combinations, to one or more of the other implementations of the application, whether or not such implementations are described and whether or not such features are presented as being a part of a described implementation. Thus, the breadth and scope of the present application should not be limited by any of the above-described exemplary implementations.

Terms and phrases used in this document, and variations thereof, unless otherwise expressly stated, should be construed as open ended as opposed to limiting. As examples of the foregoing: the term "including" should be read as meaning "including, without limitation" or the like; the term "example" is used to provide exemplary instances of the item in discussion, not an exhaustive or limiting list thereof; the terms "a" or "an" should be read as meaning "at least one," "one or more" or the like; and adjectives such as "pre-existing," "traditional," "normal," "standard," "known" and terms of similar meaning should not be construed as limiting the item described to a given time period or to an item available as of a given time, but instead should be read to encompass pre-existing, traditional, normal, or standard technologies that may be available or known now or at any time in the future. Likewise, where this document refers to technologies that would be apparent or known to one of ordinary skill in the art, such technologies encompass those apparent or known to the skilled artisan now or at any time in the future.

The presence of broadening words and phrases such as "one or more," "at least," "but not limited to" or other like phrases in some instances shall not be read to mean that the narrower case is intended or required in instances where such broadening phrases may be absent. The use of the term "module" does not imply that the components or functionality described or claimed as part of the module are all configured in a common package. Indeed, any or all of the various components of a module, whether control logic or other components, can be combined in a single package or separately maintained and can further be distributed in multiple groupings or packages or across multiple locations.

Additionally, the various implementations set forth herein are described in terms of exemplary block diagrams, flow charts and other illustrations. As will become apparent to one of ordinary skill in the art after reading this document, the illustrated implementations and their various alternatives can be implemented without confinement to the illustrated examples. For example, block diagrams and their accompanying description should not be construed as mandating a particular architecture or configuration.

While various implementations of the present disclosure have been described above, it should be understood that they have been presented by way of example only, and not of limitation. Likewise, the various diagrams may depict an example architectural or other configuration for the disclosure, which is done to aid in understanding the features and functionality that can be included in the disclosure. The disclosure is not restricted to the illustrated example architectures or configurations, but the desired features can be implemented using a variety of alternative architectures and configurations. Indeed, it will be apparent to one of skill in the art how alternative functional, logical or physical partitioning and configurations can be implemented to implement the desired features of the present disclosure. Also, a multitude of different constituent module names other than those depicted herein can be applied to the various partitions. Additionally, with regard to flow diagrams, operational descriptions and method claims, the order in which the steps are presented herein shall not mandate that various implementations be implemented to perform the recited functionality in the same order unless the context dictates otherwise.

## Claims

1. An imaging system comprising:
an objective lens optically coupled to a light generation module, the objective lens to focus light onto a sample;
a tube lens optically coupled to the objective lens, the tube lens comprising a first optical element and a second optical element, wherein the first optical element is to converge diverging light received from the objective lens onto the second optical element, and wherein the first optical element is movable along its longitudinal axis relative to the second optical element.

2. The imaging system of claim 1, further comprising: a third optical element optically coupled to the second optical element, wherein the third optical element is to converge light onto an image sensor of the imaging system, wherein optionally the imaging system does not comprise a mechanism for adjusting the objective lens to correct for spherical aberration.

3. The imaging system of claim 2, wherein the first optical element is a positive element, wherein the second optical element is a negative element, and wherein the third optical element is a positive element.

4. The imaging system of claim 3, wherein the first optical element is a doublet lens and wherein the second optical element is a doublet lens.

5. The imaging system of claim 3, wherein the third optical element is to make the imaging system telecentric on the image sensor.

6. The imaging system of claim 3, wherein the diverging light received from the objective lens diverges about 0.25 to about 1 degrees as measured by a center of the field of view marginal ray exiting a rear aperture of the objective lens.

7. The imaging system of claim 3, further comprising: a stage for translating the first optical element along its longitudinal axis.

8. The imaging system of claim 3, wherein the first optical element may translate a distance of at least about 5 mm along its longitudinal axis.

9. The imaging system of claim 1, wherein the imaging system is a sequencing system.

10. A tube lens for an imaging system, the tube lens comprising:
a first optical element to receive diverging light from an objective lens along an optical path between the objective lens and the tube lens;
a second optical element, wherein the first optical element converges the diverging light received from the objective lens onto the second optical element, wherein the first optical element is movable along its longitudinal axis relative to the second optical element; and
a third optical element to converge light onto an image sensor of the imaging system.

11. The tube lens of claim 10, wherein the first optical element is a positive element, wherein the second optical element is a negative element, and wherein the third optical element is a positive element.

12. The tube lens of claim 11, wherein the first optical element is a doublet lens and wherein the second optical element is a doublet lens, or wherein the diverging light received from the objective lens diverges about 0.25 to about 1 degree as measured by a center of the field of view marginal ray exiting a rear aperture of the objective lens, or wherein the tube lens has a focal length between about 150 mm and about 350 mm.

13. The tube lens of claim 11, wherein the third optical element makes the imaging system telecentric on an image sensor, wherein optionally the third optical element is a singlet or doublet lens.

14. The tube lens of claim 11, wherein the first optical element may translate a distance of at least about 5 mm along its longitudinal axis, wherein the first optical element preferably may translate a distance of at most about 25 mm along its longitudinal axis.

15. The tube lens of claim 10, further comprising: a stage for translating the first optical element along its longitudinal axis, wherein translation of the first optical element changes a length of an optical path between the first optical element and the second optical element.
